# EUROPEAN PATENT SPECIFICATION

(11) **EP 2 794 155 B1**
(45) Date of publication and mention of the grant of the patent: **09.12.2015**
(21) Application number: 12815831.8
(22) Date of filing: 12.12.2012
(51) Int. Cl.: B23B 3/10, B23B 3/06

(54) **VERTICAL LATHE**
VERTIKALE DREHBANK
TOUR VERTICAL

(30) Priority: 20.12.2011 IT PD20110402
(43) Date of publication of application: 29.10.2014
(73) Proprietor: MAUS S.R.L., 35011 Campodarsego (PD) (IT)
(72) Inventor: SAMMARTIN, Roberto, I-35030 Rovolon (PD) (IT); PERON, Angelo, I-35010 Massanzago (PD) (IT)
(74) Representative: Fabris, Stefano
(86) International application number: PCT/IB2012/057216
(87) International publication number: WO 2013/093719

(56) References cited:
- US-A- 4 097 175
- US-A- 5 758 555
- US-A1- 2006 153 655
- US-B1- 7 147 595

## Description

### Technical field

The present invention concerns a vertical lathe, having the characteristics declared in the preamble to the principal claim no. 1.

### Technological background

A vertical lathe having the features outlined above is known from US2006/153655. Also US 4097175 and US 7147595 are prior art to the present invention.

In the technical field of mechanical processing on the machine tool for the removal of swarf, and in particular in the field of machine tools for turning, vertical lathes are known, in which the workpiece to be machined is located on a table or chuck rotating about a vertical axis, and in which the tool-bearing slide or carriage is slidably mounted on a horizontal guide or crosspiece which is also capable of vertical movement of raising/lowering with respect to the chuck. By means of the movement of the carriage in the two aforementioned directions, the tool is conveyed along the surfaces of the workpiece being machined (locked to the workpiece-carrying chuck) in accordance with the specified stages of machining.

This configuration, though advantageous due to the fact that the chuck is provided low down and therefore in favour of gravity with respect to the workpieces being machined which are intended to be mounted on said chuck, requires nevertheless a guide structure for the tool-bearing carriage along two axes, with consequent bulk and tools in cantilever with respect to the stationary structure of the lathe. Since lathe tools of the latest generation entail ever-increasing cutting and rotation speeds, the use of such tools requires corresponding ever-greater characteristics of rigidity in the structure of the lathe, characteristics which conflict with the dimensions and extensions in cantilever imposed by the traditional configuration of vertical lathes of known type mentioned above.

### Description of the invention

A principal object of the invention is to make available a vertical lathe, structurally and functionally designed for obviating the limitations emphasised above with reference to the known art, and in particular directed at allowing the structure of the lathe adequate rigidity, with limited and compact overall dimensions, limiting as far as possible the distances of the cantilevered loads relative to the tools conveyed over the cutting trajectories required in the turning cycles, at the same time making it possible to use tools of the latest generation designed for high chuck speeds.

This and other objects which will appear clearly in what follows are achieved by the invention by means of a vertical lathe, constructed in accordance with the claims below.

### Brief description of the drawings

Further characteristics and advantages of the invention will appear more clearly from the detailed description which follows of a preferred embodiment thereof illustrated, in indicative and non-limiting fashion, with reference to the attached drawings, in which:
- figure 1 is a schematic view in side elevation of a vertical lathe according to the invention,
- figure 2 is a schematic view in front elevation of the lathe of figure 1,

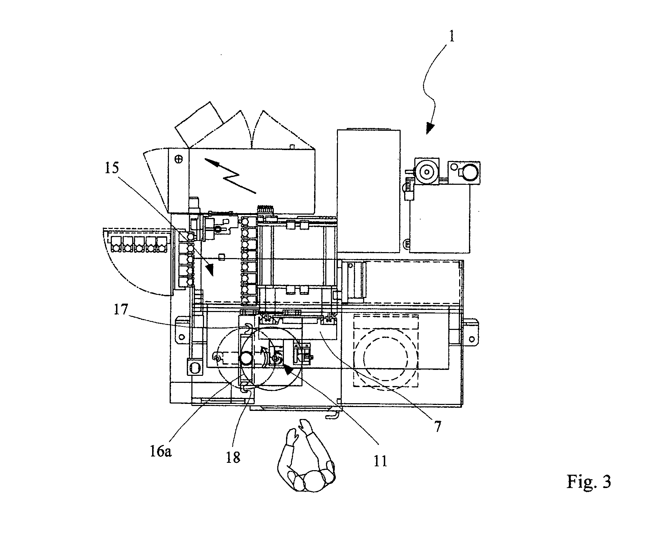

- figure 3 is a schematic view on plan from above of the lathe of the previous figures,
- figures 4 and 5 are views, respectively in side elevation and on plan from above of the lathe of the previous figures, provided furthermore with a device for automatically changing the chuck.

### Preferred method of implementing the invention

With reference to the mentioned figures, 1 comprehensively indicates a machine tool designed as a vertical lathe, for performing lathework with vertical movements of the tool, constructed in accordance with the present invention. The lathe 1, only schematically depicted, comprises a workpiece-carrying chuck 2 rotating about a principal axis Z, configured for rotating the workpiece during the mechanical processing. The axis of rotation Z is directed "vertically" if referred to a support plane for the lathe on the ground, schematically illustrated in the figures and marked T.

The chuck 2 is designed as an electro-chuck for machining or positioning and is rotated about axis Z by an electric motor coupled to it. The term "chuck" is therefore intended to refer in the present context to the particular structure and function of electro-chuck, mentioned above.

The chuck 2 is provided with a self-centring device, itself conventional, for locking the workpiece in a centred condition with respect to axis Z. In accordance with a first innovative aspect of the invention, the chuck 2 is furthermore mounted on a slide 3, slidably guided in a direction transverse to axis Z, by means of a pair of guides and against counter-guides 4, 5 respectively secured to a stationary structure 6 of the lathe and to the slide 3, which are capable of mutual sliding engagement. Said guides and counter-guides 4, 5 are extended in a spaced-apart relationship and parallel to a direction X which extends perpendicularly to axis Z, as clearly illustrated in the figures.

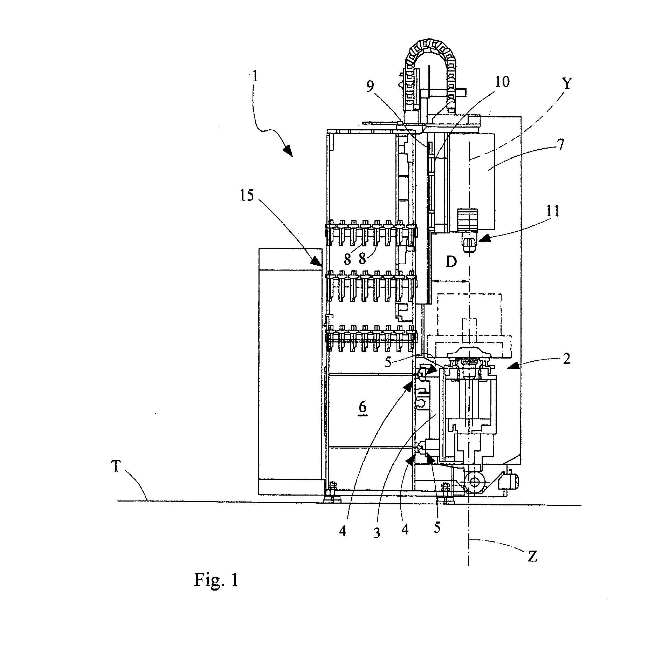

In more detail, the two guides 4 are mounted on a surface portion of the stationary structure 6 which rises vertically with respect to the horizontal support plane of the lathe on the ground T, in accordance with a configuration in which the perpendicular projections of the guides 4 on this plane overlap each other, as is also clearly apparent from figure 1.

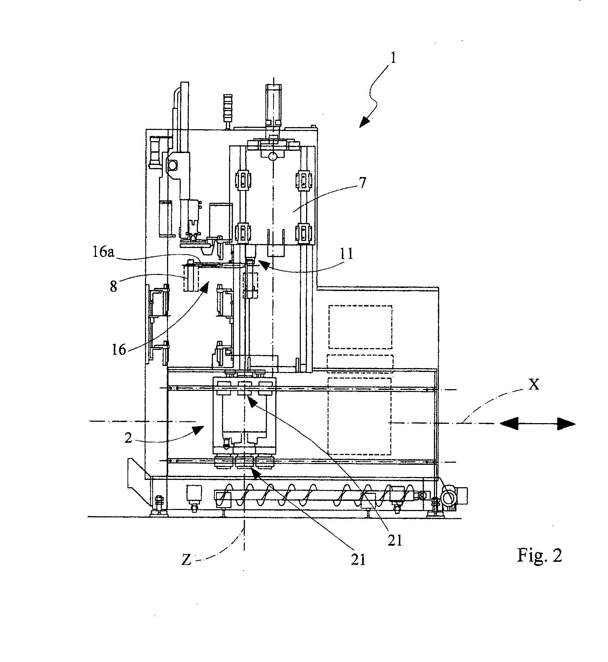

Conveniently the counter-guides 5 comprise six sliding pads (three pads for each counter-guide 5), of which two pads, indicated by 21 in figure 2 (the pad in the intermediate position along each counter-guide 5), are designed as braking pads for locking the chuck when work is in progress, this feature tending to benefit rigidity in the system in high-speed machining, in particular in machining workpieces in cantilever (i.e. with unbalanced workpieces such as for example when machining brake drums).

The lathe 1 comprises furthermore a tool-bearing carriage 7, which is operatively associated with the chuck 2, and located above the latter with respect to the vertical direction Z and capable of being movably guided from and towards the chuck 2 to bring one or more tools 8, mounted on the carriage 7, into the working area of the workpiece that is to be turned. It should be noted that the configuration with a single tool 8 makes it possible to obtain advantageously, in the working area, the maximum access to the workpiece being machined. The tool-bearing carriage 7 is movable exclusively along a direction (identified by axis Y), oriented parallel to axis Z, and perpendicular to the horizontal direction X.

9, 10 indicate guides and counter-guides, themselves conventional, in mutual sliding engagement, respectively fixed to a portion of the stationary structure 6 and to the carriage 7, to vertically guide the latter, said guides extending in a spaced-apart relationship and parallel to the direction of axis Y, as clearly illustrated in the figures, so as to allow the carriage 7 to be moved exclusively along the direction of axis Y, from and towards the working area close to the chuck 2.

The guides 9 are mounted on a surface portion of the stationary structure 6 which is erected vertically with respect to the horizontal support plane of the lathe on the ground T. Said guides are furthermore located at the top of the area in which guides 4 are located. In a preferred configuration, guides 9 and guides 4 are arranged substantially in the same plane oriented perpendicularly to the support plane T or in respective and distinct planes, parallel and close to each other, and oriented perpendicularly to the support plane T, as clearly emerges from figure 1.

A tool-bearing member 11 is provided on the carriage 7, configured for securing the tool 8, in a configuration particularly designed for machining by turning. It can equally be provided for a tool-bearing member 11 to be securable to the carriage, and also to be endowed with rotating movement, to effect possible drilling operations, besides turning operations.

Axis Y corresponds, more particularly, to the axis of extension of the tool-bearing member or support 11 (in the case, for example, of turning tools), i.e. to the principal axis of extension of the tool itself (in the case of tools for drilling, boring, milling etc.). In the case of a member or support with predominantly longitudinal extension, axis Y thus corresponds to the principal axis of longitudinal extension of the member or support. Axis Y can also be fixed (turning) or rotating (drilling, boring, milling etc.).

According to a principal feature of the lathe according to the present invention, therefore, the tool-bearing carriage 7 is movable exclusively along a direction parallel to the direction of the axis of rotation Z of the electro-chuck 2, and the workpiece-holding electro-chuck 2 is movable transversely to the direction of movement of the carriage 7, exclusively along a direction X perpendicular to the axis of rotation Z of the electro-chuck, and in such a way that the principal axis Y of the tool-bearing member 11 remains always coplanar with the plane described by the axis of rotation Z of the electro-chuck 2 in its movement along the direction X of transverse movement.

It should be noted that the provision of guiding the carriage 7 exclusively along the sole direction parallel to axis Z, with coplanarity between axis Y and the plane described by axis Z in the course along the direction of axis X, requires the space for a single pair of guides and counter-guides 9, 10 with significant containment of the distance D, indicated in figure 1, which identifies the cantilever of the tool 8 with respect to the stationary structure of the lathe, if compared with known solutions in which two orders of guides and counter-guides are specified for conducting the carriage along two perpendicular directions. The degree of freedom removed from the tool-bearing carriage 7, compared with the known solutions, is recovered in effecting the transverse movement (along axis X) of the electro-chuck 2 provided in the lathe of the present invention.

15 indicates a magazine of tools 8, fixed solidly to the stationary structure of the lathe, the magazine being configured for interacting automatically with the tool-bearing member 11, in order to allow automatic changes of tool. In other words, the tool 8 on the member 11 can be exchanged or replaced automatically with another tool 8 in the magazine 15.

A preferred configuration can provide for a device 16 with an exchanger arm 16a carrying gripping means 17, 18 for the tool, which is rotatably supported to present one or the other of the gripping means respectively near the magazine or near the tool-bearing member 11, in order to move a new tool from the magazine towards the tool-bearing member of the carriage and simultaneously move the worn tool connected to the carriage towards the magazine, for the automatic unloading of said worn tool. A preferred choice can provide for a magazine 15 with twenty-four tools movable along two Cartesian axes for preparing tool 8 on the exchanger arm 16a.

In the magazine 15 an optional stage can furthermore be provided, of loading/unloading tools to replace worn tools with new tools, for example in groups of five tools at a time.

A further advantageous aspect connected with the structure of the lathe according to the invention lies in the fact that the loading and unloading of workpieces with respect to the chuck can take place in the same area, located on the same side with respect to the chuck and made suitably accessible by means of a lateral movement, in the direction X, of the chuck itself. A common line can therefore be situated in this area for transfer means for the workpieces, in order to allow the loading of workpieces for machining and the unloading of machined workpieces to take place in said area. This lateral loading/unloading area can furthermore be chosen at a suitable distance from the tool-bearing carriage, thanks to the transverse mobility of the chuck, thus avoiding both the problems of possible interference between the respective areas of activation, and the problems inherent in the known solutions (connected for example with loads in movement, with interference between moving parts, with trajectories and space required, etc.), where the tool-bearing carriage is set up with gripping members for workpieces for loading and unloading said workpieces.

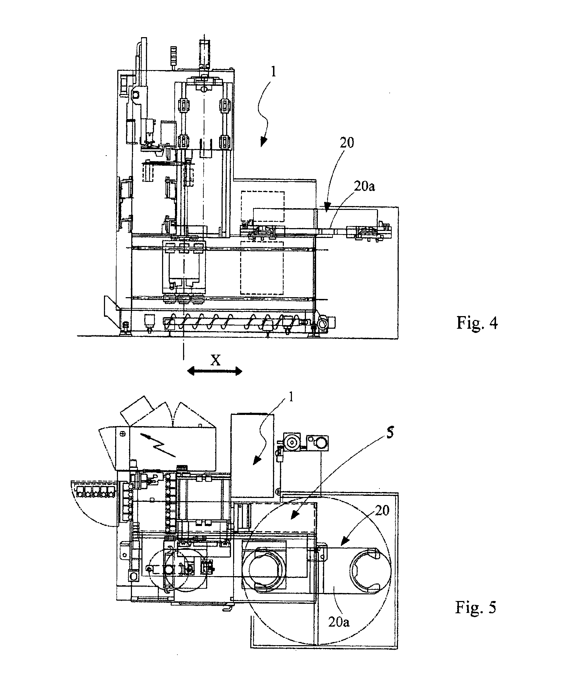

Another advantageous aspect of the invention is connected with the fact that the lathe described above lends itself easily to being coupled with devices designed for changing the self-centring mechanism of the chuck, if there should be a need during the turning cycle to arrange a change of "type" for workpieces for turning. In other words, with reference to figures 4 and 5, in the area for loading/unloading workpieces (indicated by S), for example involving a doorway or similar structure for transferring workpieces, located at the side or the front of the lathe and easily accessible by the movable chuck along the transverse direction X, there can be connected a device 20 for changing the self-centring mechanism, in which the self-centring mechanism on the chuck 2 is removed and automatically replaced by another previously-equipped self-centring mechanism in the device 20. A preferred configuration provides for the use of an exchanging arm 20a, rotatably supported around a vertical direction, for executing, by means of angular rotations of 180°, the operations of automatic changing of the self-centring mechanism.

The invention thus achieves the proposed objects, bringing about the numerous declared advantages by comparison with the known solutions.

To sum up, there is the advantage of creating a lathe structure of limited bulk, simple in structural components but of high rigidity so as to permit the use of turning tools even at high speed. Also to be counted, by comparison with known solutions, is improved tool changing and improved loading/unloading of workpieces. Improved flexibility should also be counted, of the stage of changing the self-centring mechanism of the chuck for turning batches of workpieces to be machined dimensionally different from each other.

Yet another advantage is the high degree of access to the workpiece being machined in the work area, access which is maximized in the case of a single tool set up on the tool-bearing slide.

Finally, the high flexibility should be noted of the machine tool according to the invention, thanks to the configuration specified with fixed turning tool and/or with rotating tool for machining including drilling.

## Claims

1. Vertical lathe, comprising a workpiece-holding electro-chuck (2) rotating around an axis (Z) of rotation, said axis (Z) being oriented vertically with respect to a support plane of the lathe on the ground (T), and a tool-bearing carriage (7) mounted on the lathe above the electro-chuck (2) with respect to the vertical direction and movably guided from and towards said electro-chuck (2), said tool-bearing carriage (7) having at least one tool-bearing member (11) with a principal axis (Y) of extension, **characterized in that** said tool-bearing carriage (7) is movable exclusively along a direction parallel to the direction of the axis of rotation (Z) of the electro-chuck, and **in that** the workpiece-holding electro-chuck (2) is movable in translation, transversely to the direction of movement of the carriage (7), exclusively along a direction (X) perpendicular to said axis of rotation (Z) of the electro-chuck, and in such a way that the principal axis (Y) of the tool-bearing member (11) is coplanar with the plane described by the axis of rotation (Z) of the electro-chuck (2) in its movement along said direction (X) of transverse movement.

2. Lathe according to Claim 1, comprising first guide means (9, 10) between a stationary structure (6) of said lathe and said tool-bearing carriage (7), predisposed for slidably guiding the carriage (7) in its respective direction of movement and second guide means (4, 5) between said stationary structure (6) and said tool-bearing electro-chuck (2) for slidably guiding the electro-chuck (2) in its corresponding direction (X) of movement, oriented perpendicularly to the direction of movement of the tool-bearing carriage (7).

3. Lathe according to Claim 1 or 2, comprising a tool-bearing member (11) mounted on said carriage (7), to be guided integrally with the carriage and supported on said carriage in such a way as to be movable between an operative position of machining by turning a workpiece mounted on the electro-chuck (2), and a non-operative position, wherein said tool-bearing member (11) is distanced from the work area of said workpiece.

4. Lathe according to one or more of the preceding claims, comprising a magazine (15) of tools (8) capable of interacting with said tool-bearing member (11), so as to allow the operations of automatic tool changing between said magazine (15) and said tool-bearing carriage (7).

5. Lathe according to Claim 4, wherein said magazine (15) of tools is provided with a device (16) for changing tool including an exchanging arm (16a) provided with a pair of gripping means (17, 18) for tools, said arm (16a) being supported rotatably on the lathe, to move a new tool from the magazine (15) towards the tool-bearing member (11) of the carriage (7) and simultaneously move the worn tool connected to the carriage (7) towards the magazine (15), for the automatic unloading of said worn tool.

6. Lathe according to claim 2, wherein said guide means comprise a pair of guides (4) extended in a spaced-apart relationship and parallel to said direction (X), the two guides (4) being mounted on a surface portion of the lathe which rises vertically with respect to an horizontal support plane of the lathe on the ground (T), in accordance with a configuration in which the perpendicular projection of the guides (4) on this plane overlap each other.

## Patentansprüche

1. Vertikale Drehbank, die eine Elektro-Werkstückhalterungs-Einspannvorrichtung (2) aufweist, die sich um eine Drehachse (Z) herum dreht, wobei die Achse (Z) bezüglich einer Abstützebene der Drehbank auf dem Boden (T) vertikal ausgerichtet ist, und einen Werkzeug-Aufnahmeschlitten (7) aufweist, der auf der Drehbank oberhalb der Elektro-Einspannvorrichtung (2) bezüglich der vertikalen Richtung befestigt ist und beweglich von und zur Elektro-Einspannvorrichtung (2) geführt wird, wobei der Werkzeug-Aufnahmeschlitten (7) zumindest ein Werkzeug-Aufnahmeelement (11) mit einer Hauptausdehnungsachse (Y) aufweist,
**dadurch gekennzeichnet, dass** der Werkzeug-Aufnahmeschlitten (7) ausschließlich entlang einer Richtung beweglich ist, die parallel zur Richtung der Drehachse (Z) der Elektro-Einspannvorrichtung ist, und dadurch, dass die Elektro-Werkstückhalterungs-Einspannvorrichtung (2) bei einer Verschiebung quer zur Bewegungsrichtung des Schlittens (7) ausschließlich entlang einer Richtung (X) beweglich ist, die senkrecht zur Drehachse (Z) der Elektro-Einspannvorrichtung ist, und in der Weise beweglich ist, dass die Hauptachse (Y) des Werkzeug-Aufnahmeelements (11) mit der Ebene, die durch die Drehachse (Z) der Elektro-Einspannvorrichtung (2) beschrieben ist, bei ihrer Bewegung entlang der Richtung (X) einer Querbewegung koplanar ist.

2. Drehbank gemäß Anspruch 1, umfassend: erste Führungseinrichtungen (9, 10) zwischen einer stationären Anordnung (6) der Drehbank und dem Werkzeug-Aufnahmeschlitten (7), die zum gleitbeweglichen Führen des Schlittens (7) in ihren jeweiligen Bewegungsrichtungen vorab festgelegt sind, und zweite Führungseinrichtungen (4, 5) zwischen der stationären Anordnung (6) und der Elektro-Werkstückhalterungs-Einspannvorrichtung (2) zum gleitbeweglichen Führen der Elektro-Einspannvorrichtung (2) in ihrer entsprechenden Bewegungsrichtung (X), die senkrecht zur Bewegungsrichtung des Werkzeug-Aufnahmeschlittens (7) ausgerichtet ist.

3. Drehbank gemäß Anspruch 1 oder 2, umfassend: ein Werkzeug-Aufnahmeelement (11), das auf dem Schlitten (7) befestigt ist, um einstückig mit dem Schlitten geführt zu werden, und auf dem Schlitten in der Weise abgestützt ist, um zwischen einer Betriebsposition zum Bearbeiten durch Drehen eines Werkstücks, das auf der Elektro-Einspannvorrichtung (2) befestigt ist, und einer nicht betriebsbereiten Position beweglich zu sein, wobei das Werkzeug-Aufnahmeelement (11) vom Arbeitsbereich des Werkstücks distanziert ist.

4. Drehbank gemäß einem oder mehrerer der vorhergehenden Ansprüche, umfassend ein Magazin (15) von Werkzeugen (8), die mit dem Werkzeug-Aufnahmeelement (11) zusammenwirken können, um so die Abläufe eines automatischen Werkzeugwechslers zwischen dem Magazin (15) und dem Werkzeug-Aufnahmeschlitten (7) zu ermöglichen.

5. Drehbank gemäß Anspruch 4, wobei das Magazin (15) von Werkzeugen mit einer Vorrichtung (16) zum Werkzeugwechsel mit einem Wechselarm (16a) vorgesehen ist, der mit einem Paar von Greifeinrichtungen (17, 18) für Werkzeuge vorgesehen ist, wobei der Arm (16a) drehbeweglich auf der Drehbank abgestützt ist, um ein neues Werkzeug vom Magazin (15) zum Werkzeug-Aufnahmeelement (11) des Schlittens (7) zu bewegen und gleichzeitig das abgenutzte Werkzeug, das mit dem Schlitten (7) verbunden ist, zum Magazin (15) zum automatischen Entladen des abgenutzten Werkzeugs zu bewegen.

6. Drehbank gemäß Anspruch 2, wobei die Führungseinrichtungen ein Paar von Führungen (4) aufweisen, die sich in einem voneinander getrennten Verhältnis erstrecken und parallel zur Richtung (X) sind, wobei die beiden Führungen (4) auf einem Flächenbereich der Drehbank, der sich vertikal bezüglich einer horizontalen Abstützebene der Drehbank auf dem Boden (T) erhebt, in Übereinstimmung mit einer Konfiguration befestigt sind, bei der sich die senkrechten Vorsprünge der Führungen (4) auf dieser Ebene einander überlappen.

## Revendications

1. Tour vertical, comprenant un mandrin électrique de maintien de pièce à usiner (2) tournant autour d'un axe de rotation (Z), ledit axe (Z) étant orienté verticalement par rapport à un plan de support du tour sur le sol (T), et un chariot porte-outil (7) monté sur le tour au-dessus du mandrin électrique (2) par rapport à la direction verticale et guidé de manière mobile à partir de et vers ledit mandrin électrique (2), ledit chariot porte-outil (7) ayant au moins un élément porte-outil (11) avec un axe d'extension (Y) principal, **caractérisé en ce que** ledit chariot porte-outil (7) est exclusivement mobile le long d'une direction parallèle à la direction de l'axe de rotation (Z) du mandrin électrique, et **en ce que** le mandrin électrique de maintien de pièce à usiner (2) est mobile en translation, de manière transversale par rapport à la direction de déplacement du chariot (7), exclusivement le long d'une direction (X) perpendiculaire audit axe de rotation (Z) du mandrin électrique, et de sorte que l'axe principal (Y) de l'élément porte-outil (11) est coplanaire avec le plan décrit par l'axe de rotation (Z) du mandrin électrique (2) dans son mouvement le long de ladite direction (X) du mouvement transversal.

2. Tour selon la revendication 1, comprenant des premiers moyens de guidage (9, 10) entre une structure fixe (6) dudit tour et ledit chariot porte-outil (7), prédisposés pour guider de manière coulissante le chariot (7) dans sa direction de déplacement respective et des seconds moyens de guidage (4, 5) entre ladite structure fixe (6) et ledit mandrin électrique porte-outil (2) pour guider de manière coulissante le mandrin électrique (2) dans sa direction de déplacement (X) correspondante, orientée perpendiculairement par rapport à la direction de déplacement du chariot porte-outil (7).

3. Tour selon la revendication 1 ou 2, comprenant un élément porte-outil (11) monté sur ledit chariot (7), pour être guidé de manière solidaire avec le chariot et supporté sur ledit chariot afin d'être mobile entre une position opérationnelle d'usinage en faisant tourner une pièce à usiner montée sur le mandrin électrique (2), et une position non opérationnelle, dans laquelle ledit élément porte-outil (11) est à distance de la zone de travail de ladite pièce à usiner.

4. Tour selon une ou plusieurs des revendications précédentes, comprenant un magasin (15) d'outils (8) pouvant interagir avec ledit élément porte-outil (11), afin de permettre les opérations de changement d'outil automatique entre ledit magasin (15) et ledit chariot porte-outil (7).

5. Tour selon la revendication 4, dans lequel ledit magasin (15) d'outils est prévu avec un dispositif (16) pour changer l'outil, comprenant un bras d'échange (16a) prévu avec une paire de moyens de préhension (17, 18) pour les outils, ledit bras (16a) étant supporté en rotation sur le tour, afin de déplacer un nouvel outil du magasin (15) vers l'élément porte-outil (11) du chariot (7) et déplacer simultanément l'outil usé raccordé au chariot (7) vers le magasin (15), pour le déchargement automatique dudit outil usé.

6. Tour selon la revendication 2, dans lequel lesdits moyens de guidage comprennent une paire de guides (4) étendus en relation espacée et parallèle à ladite direction (X), les deux guides (4) étant montés sur une partie de surface du tour qui monte verticalement par rapport à un plan de support horizontal du tour sur le sol (T), selon une configuration dans laquelle les saillies perpendiculaires des guides (4) sur ce plan se chevauchent.
